Europäisches Patentamt

European Patent Office

Office européen des brevets

(11) Publication number : **0 496 603 A1**

(12) **EUROPEAN PATENT APPLICATION**

(21) Application number : 92300553.2

(22) Date of filing : 22.01.92

(51) Int. Cl.$^5$: **H01S 3/17,** H01S 3/06,
H04B 10/16

(30) Priority : 23.01.91 US 644460

(43) Date of publication of application :
29.07.92 Bulletin 92/31

(84) Designated Contracting States :
DE FR GB IT NL SE

(71) Applicant : AMOCO CORPORATION
200 East Randolph Drive
Chicago Illinois 60601 (US)

(72) Inventor : Grubb, Stephen Gregory
1212 Yorkshire Drive
Naperville, Illinois 60563 (US)
Inventor : Anthon, Douglas William
925 Cherry Street
Wheaton, Illinois 60187 (US)

(74) Representative : Lewin, John Harvey et al
Elkington and Fife Prospect House 8
Pembroke Road
Sevenoaks, Kent TN13 1XR (GB)

(54) Sensitized erbium fiber optical amplifier.

(57) An optical amplifier is provided that includes an optical fiber for amplifying a light signal in a single transverse mode. The amplifier provides high gain at high levels of output power for wavelengths in the 1.535 micron region. The fiber has an inner core and an outer cladding end pumped by a Nd laser rod, where the inner core] comprises a host glass doped with erbium (Er) and a sensitizer such as ytterbium (Yb) or iron (Fe). Preferably the host glass is phosphatic glass, but it may also be doped silicic glass (e.g., phosphate or borate doped). Electrical energy is provided to diode lasers that pump the Nd laser rod, which in turn pumps the fiber. Such a configuration for pumping the fiber provides a high energy transfer from the diodes to the Nd laser rod, which in turn enables high pumping powers to be coupled into the single-mode co-doped fiber. Based on the amplification characteristics of the co-doped fiber and the efficient coupling of power from the laser diodes, the amplifier provides power and small signal gains comparable to the best observed, while requiring only conventional and readily available diode-based pump sources.

EP 0 496 603 A1

Jouve, 18, rue Saint-Denis, 75001 PARIS

Technical Field of the Invention

The invention is related to optical amplifiers and, more particularly, to erbium fibers amplifiers pumped by a diode laser source.

Background of the invention

Optical amplifiers have attracted a great deal of attention for use in fiber optic communications systems. They exhibit high gain, low noise, negligible crosstalk and intermodulation distortion, bit-rate transparency, and polarization insensitive gain. These properties make optical fibers superior to semiconductor devices as amplifiers in fiber optic systems. Moreover, fiber-based amplifiers do not require conversion from photon energy to electrical energy as do semiconductor devices.

In a communications system of any significant size, there is typically a distribution network that includes long communication paths and nodes where the network branches. In such a network, amplifiers are required in order to maintain the amplitude of the signal and the integrity of any data it carries in route between a source and destination. For these amplifiers to function properly, they must exhibit high small signal gains and/or high output saturation powers.

Application of erbium-doped optical fibers as amplifiers has received a lot of attention recently because the characteristic gain bandwidth of these fibers is within the third telecommunications window of 1.5 microns commonly used in fiber optic communications systems. Recent efforts in designing erbium fiber amplifier systems has focused on providing the optimum wavelength for pumping the erbium, with regard to both the efficiency of the small signal gain and availability of long-lived pump sources having relatively high optical output quality. Diode lasers have been a focus of interest as pumping sources because of their high electrical-to-optical conversion efficiencies, long lives and small size. Because of these qualities, laser diodes are typically considered to be the most commercially viable pump sources.

Many wavelengths and pump sources have been tried for directly pumping erbium in erbium-doped fibers. For example, in order of their representative gain efficiency the following pump wavelengths have been explored: 980 nm (4 dB/mW), 1480 nm (2.5 dB/mW), 532 nm (1.5 dB/mW), 660 nm (0.5 dB/mW), and 807 nm (0.2 dB/mW). Directly pumping erbium at the wavelengths of 980 or 1480 nm is currently the most popular approach and both pump wavelengths have been directly provided by diode lasers.

In terms of gain efficiency, directly pumping an erbium-doped fiber at a wavelength of 980 nm is the most attractive, but availability of diode lasers at this wavelength is limited and serious issues concerning the lifetimes of strained-layer InGaAs diodes at this wavelength have not been resolved. As an alternative to pumping at a wavelength of 980 nm, erbium amplifiers have been pumped on the edge of the 1550 band at 1480 nm with InGaAsP diode lasers. The gain efficiency of pumping at 1480 nm is not as high as pumping at 980 nm, but pump diodes at 1480 nm currently have longer demonstrated lifetimes than diodes at 980 nm. There are some additional advantages to pumping at a wavelength of 1480 nm. One advantage is that the pump wavelength is close to the signal wavelength and therefore it is relatively easy to ensure single-mode operation of the erbium fiber at the pump wavelength, a condition necessary to achieve efficient gain. The gain profile for pumping at 1480 nm is also broader than for pumping at 980 nm, an advantage for wavelength division multiplying (WDM) applications. Conversely, the noise performance of a 1480 nm pumped erbium fiber amplifier is intrinsically worse than a 980 nm pumped amplifier due to the lower value of the inversion parameter.

Although some degree of success has been achieved toward the goal of providing an erbium-doped fiber amplifier having high small signal gain efficiency and long life, the power saturation output remains relatively low (R. Baker, physics World, PP. 41-44.March 1990.). The power saturation output of a fiber is typically given as the output power (dBm) that decreases the small signal gain by three (3) decibels (dB). In general, a fiber is characterized by a steady small signal gain that is maintained over a wide range of power outputs (i.e., photon density). As the input signal of the fiber increases in power, the power of the output signal reaches a saturation condition that causes the small signal gain to decrease with any additional increase in the power of the input signal.

In order to increase the level of power saturation in erbium-doped fiber pumping at the wavelength of 532 nm has attracted a great deal of attention because of the availability of frequency-doubled, diode-pumped Nd:YAG lasers of high output power and high spatial mode quality (A. Righetti et al., Electr. Lett., 26(5). p.330, 1990). The overall efficiency (i.e.. electron-to-photon conversion) of any erbium amplifier system based on frequency-doubled diode-pumped lasers, however, is very low (i.e., 2% at 532 nm compared to 15% for the fundamental frequency) precluding its use in some applications such as repeaters.

Although laser diodes at 808 nm are widely available, their use as pumps for erbium fiber amplifiers has generally been dismissed because of the strong excited-state absorption (ESA) of erbium at 807 nm, which seriously limits the efficiency of such amplifiers. As a result of the intense ESA in the 807 nm pump band for an erbium fiber, only small gains have been observed (e.g., six dB - T.J. Whitely, "Laser Diode Pumped Operation of $Er^{+3}$-Doped Fibre Amplifiers" Electron. Lett. 1988, No. 24; p.1537)

A laser based on a ytterbium-erbium co-doped phosphatic glass rod has been pumped by a Nd:YAG laser at its 1064 nm output. Hanna et al., "A 1.54 μm Er Glass Laser Pumped By A 1.064μm Nd: YAG Laser", Optics Communications, Vol. 63, No. 6, 15 September 1987: pp. 417-420. Hanna et al. reports experimental results indicating the co-doped phosphatic glass rod may make a laser of reasonable gain and efficiency for use as a source of 1540 nm radiation in a communications system.

Hanna et al. speculates that a single mode, co-doped ytterbium-erbium fiber may replace the ytterbium-erbium co-doped phosphate rod in order to provide a low lasing threshold that is compatible with pumping by a low-power Nd:YAG laser, which in turn is pumped by a diode. The low threshold characteristics of the fiber are thought by Hanna et al. to be one modification of their experimental laser that would increase pumping efficiency and allow a low-power Nd:YAG laser to be used as a pump source while maintaining reasonable efficiency characteristics for the co-doped erbium glass laser. Like all bulk laser glass, however, the single-pass gain of the co-doped erbium glass rod laser measured by Hanna et al. is low and, therefore, does not suggest the co-doped glass could be successfully employed in a fiber of an optical amplifier to provide high gain and/or high output saturation power.

## Summary Of the Invention

It is the primary object of the invention to provide an erbium glass optical amplifier pumped by readily available 808 nm laser diodes that produces a much greater power saturation output than previously available from amplifiers pumped by such devices. In this connection, it is also an object of the invention to provide an optical amplifier, having the foregoing characteristic, whose small signal gain is substantially as great as previously available from the best erbium glass optical amplifiers.

It is a specific object of the invention to provide a highly efficient, long-lived erbium glass optical amplifier that is generally suitable for high power applications, particularly in the area of fiber optic communications networks.

It is a further object of the invention to provide an erbium glass optical amplifier having an optical noise figure [ratio] at or near the quantum limit.

This invention provides for the use of high-power, diode-pumped $Nd^{3+}$ lasers to pump into the broad absorption bands of a sensitizer such a $Yb^{3+}$ or $Fe^{3+}/Fe^{2+}$ with subsequent energy transfer to $Er^{3+}$ in co-doped optical fibers. The properties of $Nd^{3+}$ lasers are well known. In this regard, they are relatively efficient and provide a diffraction-limited output. Moreover, because they are well-known and widely used devices, they are reliable. Because of their diffraction limited output characteristic, $Nd^{3+}$ lasers are well suited as a source for coupling high powers into a single-mode optical fiber.

Diode lasers operating at the 808 nm band are also well known. They are reliable and efficient and capable of providing high power outputs. The outputs from these diode lasers, however, are not diffraction limited and typically the coupling into a single mode fiber is poor. Recently, efficient coupling from multistripe diode laser arrays to $Nd^{3+}$ lasers has become available. In this regard, U.S. Patent No. 4,710,940 to Sipes discloses a highly efficient single-mode Nd:YAG laser pumped by the multimode outputs of laser diode arrays. Using the efficient coupling disclosed in the Sipes patent, applicants have coupled up to 300mW of power from a commercially available diode-pumped Nd:YAG laser pump source into single-mode optical fiber, a substantially greater amount than has been achieved with any diode laser source directly.

In the invention, highly efficient diode-pumped $Nd^{3+}$ lasers pump the ytterbium and erbium doped, single-mode fiber and couple several hundred milliwatts of power into the fiber, power that is nearly an order of magnitude greater than that possible by directly pumping the fiber with a diode laser. Because the output saturation power in an erbium fiber amplifier is a function of the power available from the pump source (rather than a limiting characteristic of a given fiber), the high-power pumping provided by diode-pumped $Nd^{3+}$ lasers leads to larger output saturation powers for the fiber that are of primary interest in power amplifier applications such as fiber optic communications networks.

Sensitizing an erbium fiber by co-doping it with ytterbium or iron has the advantage of overlaying the intense broad absorption of the ytterbium or iron over the relatively narrow and weak absorption bands of erbium. Co-doping drastically decreases the wavelength sensitivity of the pump source and, thereby, allows pumping of the fiber outside the excited state absorption (ESA) bands of erbium. If the erbium can be nearly fully inverted in the sensitized fiber, the noise figure can approach the quantum limit of 3 dB.

The benefit of decreased wavelength sensitivity and reduced ESA achieved by co-doping is somewhat offset in silica fiber by the limited efficiency of the ytterbium-to-erbium energy transfer and the back transfer of

energy from the $^4|_{11/2}$ state of erbium. It has been shown, however, that the transfer of energy from ytterbium to erbium is more efficient in a phosphate-based glass. Additionally, the rate of back transfer of energy from erbium to ytterbium is drastically decreased in the phosphate-based glass. This is due to the fact that the lifetime of the erbium $^4|_{11/2}$ state in a phosphate-based glass is 30 times shorter than in silica glass, thereby decreasing the probability of back transfer of energy. In view of the foregoing, the fiber is preferably a ytterbium-erbium, co-doped single mode fiber in a phosphate-based glass, a phosphorus or boron doped silica glass fabricated by the chemical vapor deposition (CVD) process, or other hosts and/or selective dopants that minimize the Er $^4|_{11/2}$ lifetime while substantially preserving the Er $^4|_{13/2}$ metastable lifetime. In view of the foregoing, the fiber is preferably a ytterbium-erbium, co-doped single mode fiber in phosphate-based glass, a phosphate or borate-doped silica glass fabricated by the chemical vapor deposition (CVD) process, or other hosts and/or selective dopants that minimize the Er $^4L_{11/2}$ lifetime while substantially preserving the Er $^4|_{13/2}$ metastable lifetime.

## Brief Description of the Invention

Figure 1 is a schematic block diagram of an optical communications system incorporating optical amplifiers that utilize erbium glass fibers co-doped with a sensitizer such as ytterbium in accordance with the invention;

Figure 2 is a quantum level diagram using conventional spectroscopic notation to illustrate the energy transfer from a laser diode pump source to the sensitizer and then to the erbium of the glass fiber;

Figure 3 is a cross-sectional view of an erbium fiber in one of the optical amplifiers of Figure 1;

Figure 4 is a schematic diagram of one of the optical amplifiers in Figure 1;

Figure 5 is a graph of the small signal gain of the amplifier in Figure 4 with respect to various levels of absorbed pump power; and

Figure 6 is a graph of the gain of the amplifier in Figure 4 with respect to the output power of the amplifier, illustrating the power saturation of the amplifier to be at approximately +10 dBm.

## Detailed Description of the Invention

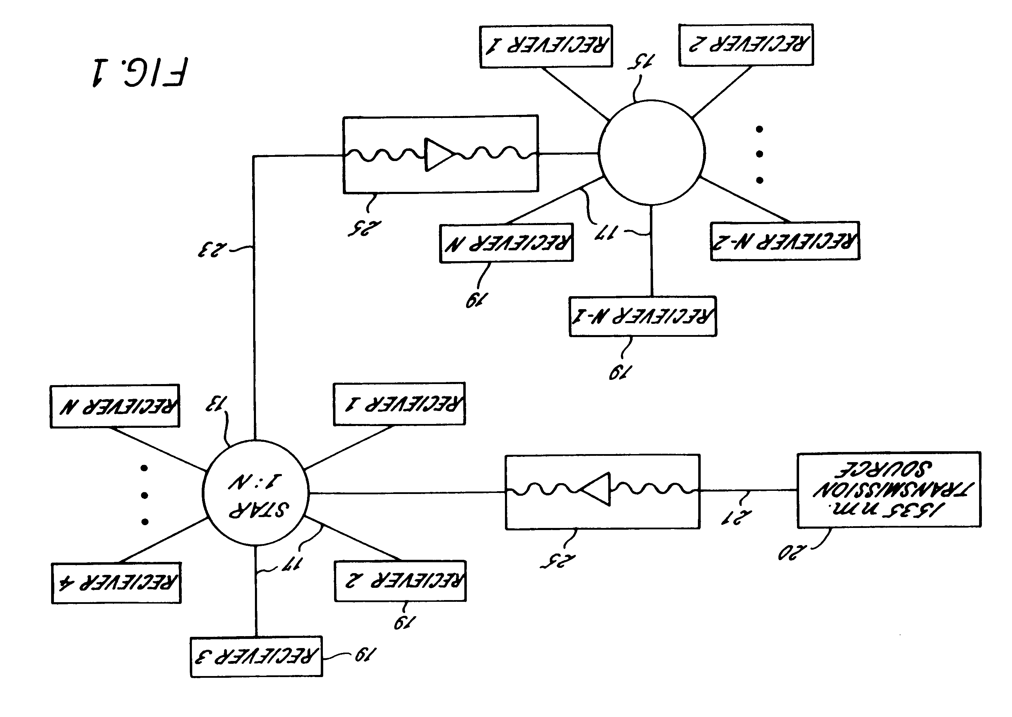

Turning to the drawings and referring first to Figure 1, an exemplary optical communication system is illustrated that incorporates optical amplifiers 11 made according to the invention. The illustrated system employs two distribution stars 13 and 15, each distributing one incoming optical signal into N fiber optic branches 17. Each branch 17 leads to a receiver 19 that may either provide for optical processing of the signal carried by the fiber optics or provide for the conversion of the signal to an electrical signal. An example of the latter is a cable television system, wherein the receivers convert the optical signal to an electrical signal that is received by a CRT monitor connected to each of the receivers.

In the illustrated communications system, an optical signal at a characteristic frequency of 1535 nm is provided by a transmission source 20 such as a cable television operator. The main truck lines 21 and 23 of the system are conventional fiber optic cables designed for low loss transmission at the third telecommunications window about 1.5 μm.

For fiber optic systems in commercial use today, the optical signal typically must be converted to an electrical signal at communications nodes such as the stars 13 and 15 as well as in between the nodes because of the need to amplify the signal before it is distributed. If the signal is not amplified, the signals received into the branches of a node are unacceptably weak for many applications. For example, in a cable television system, a communications node that distributes a signal directly to receivers in the homes of subscribers must have sufficient power to convert to a usable electrical signal. This usually means that the optical signal must be strong enough to be received by a photodiode with a suitably high signal-to-noise ratio. In a multi-channel analog CATV system, the power required to reliably drive a photodiode is relatively high and demands a strong optical signal as its input. Therefore, these types of communications systems that employ optical fibers are required to convert optical signals to electrical signals at the communications nodes in order to amplify the signal before passing it to a branch. Furthermore, if one of the branches carrying an amplified signal is an optical fiber, the signal must be converted again in order to return it to an optical signal for transmission. Such conversions of the signal make the system nodes complex, expensive, inefficient and noisy due to many in-line amplifiers.

In the illustrated communications system, the distribution stars 13 and 15 are all-optical nodes such as 1 x N splitters manufactured by Gould Inc. of Glen Burnie, Maryland. Distribution stars are not commonly used in commercial communications systems today. Heretofore, there has not been available optical amplifiers that are capable of sufficiently boosting the power of the input signal to the star so that each of the output optical signal maintains sufficient power to drive a photodiode.

In the optical communications system of Figure 1, a high power and high gain optical amplifier 25 made according to the invention is placed at strategic points in the system for the purpose of providing a high power optical signal to each of the distribution stars 13 and 15, thereby allowing the system to maintain the signal as an optical signal until it reaches its destination. The amplifier 25 includes an amplifying fiber that is pumped by a neodymium (Nd) laser rod that in turn is pumped by at least one laser diode that provides a high energy light output. The fiber has an inner core and an outer cladding dimensioned to amplify the light signal in a single mode. The glass of the inner core is doped with erbium ($Er^{3+}$) and a sensitizer such as ytterbium ($Yb^{3+}$) or iron ($Fe^{3+}$ or $Fe^{2+}$). The fiber is end pumped and is coupled at its ends to maintain fibers in a manner that ensures optical feedback is minimized.

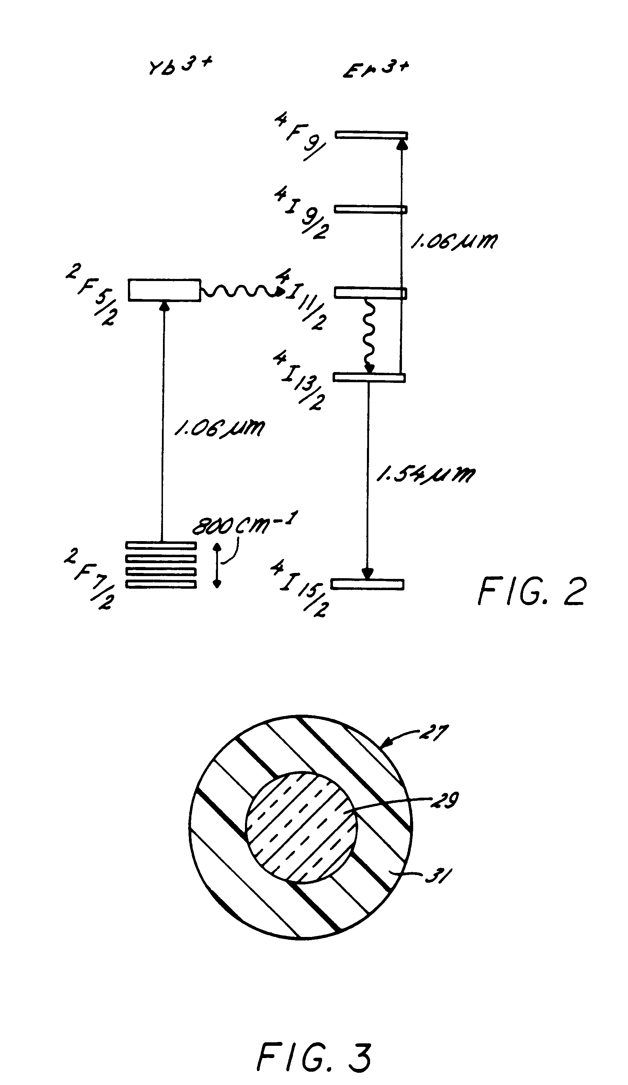

Referring now to Figure 2, a glass fiber co-doped with erbium ($Er^{3+}$) and ytterbium ($Yb^{3+}$) according to the invention absorbs pump radiation at 1.06 $\mu$m from the highest sub-level of the $^2F_{7/2}$ quantum level to its $^2F_{5/2}$ quantum level. From the $^2F_{5/2}$ quantum level, a non-radiative transfer occurs from the $^2F_{5/2}$ quantum level to the $^4I_{11/2}$ quantum level of $Er^{3+}$. Non-radiative decay occurs from the $^4I_{11/2}$ quantum level of $Er^{3+}$ to the metastable $^4I_{13/2}$ quantum level of $Er^{3+}$. Amplification emission occurs from the $^4I_{13/2}$ quantum level to the ground level of $Er^{3+}$ at $^4I_{15/2}$.

In a glass fiber co-doped with $Yb^{3+}$ and $Er^{3+}$, the narrow and relatively weak absorption bands of $Er^{3+}$ at 807 nm and 980 nm are overlaid by the intense and broad absorption of $Yb^{3+}$ centered at 960 nm. By co-doping an $Er^{3+}$ fiber with $Yb^{3+}$, it is not as sensitive to the wavelength of a pump source as it would be if the $Er^{3+}$ were pumped directly since it is the $Yb^{3+}$ that is directly pumped rather than the $Er^{3+}$. Also, co-doping an $Er^{3+}$ fiber with $Yb^{3+}$ allows the fiber to be pumped outside the range of strong excited state absorption (ESA) of $Er^{3+}$. According to the invention, the pump source for the co-doped fiber provides radiation at 1.06 $\mu$m, which is absorbed by the $Yb^{3+}$ and then transferred to the $Er^{3+}$. Some ESA can occur when the fiber is pumped in this manner since the 1.06 $\mu$m radiation of the pump source can be directly absorbed by the $Er^{3+}$ from the $^4I_{13/2}$ metastable quantum level to the $^4F_{9/2}$ quantum level. Such ESA at 1.06 $\mu$m by the $Er^{3+}$ is not strong, however, and the efficiency of the energy transfer from the pump source to the lasing radiation at 1.54 $\mu$m is high.

In the past, co-doped $Er^{3+}/Yb^{3+}$ fibers have been most commonly silica based. Such silica-based fibers have not generated a great deal of interest for commercial applications, however, because of the limited efficiency of the energy transfer from the $^2I_{5/2}$ level of $Yb^{3+}$ to the $^4I_{11/2}$ level of $Er^{3+}$ caused by the back transfer of energy from the $^4I_{11/2}$ level to the $^2I_{5/2}$ level. Because of the limited efficiency of the energy transfer from $Yb^{3+}$ to $Er^{3+}$, it was commonly believed that co-doped $Er^{3+}/Yb^{3+}$ fiber performed no better than fiber doped only with $Er^{3+}$ and directly pumped at 808 nm, where a strong ESA occurs. However, it has been recognized that the transfer of energy from $Yb^{3+}$ to $Er^{3+}$ is more efficient in a phosphate-based glass than in silica (E.F. Artem'ev, Sov. J. Quantum Electron. , 11(9). 1266, 1981). Specifically, the rate of back transfer from $Er^{3+}$ to $Yb^{3+}$ is drastically decreased in phosphate glass as compared to silica because the lifetime of the $^4I_{11/2}$ state in $Er^{3+}$ in a phosphate host is approximately 30 times shorter than in silica, thereby decreasing the probability of the back transfer of energy.

Applicants commissioned Schott Glass of Duryea, Pennsylvania to make custom melts of an Er/Yb phosphate glass. along with an undoped phosphate glass to be used as the cladding material in the fabrication of the optical fiber 27 shown in Figure 3. The glass melts were requested to be performed under rigorously dry conditions as water is an efficient quencher of the $^4I_{13/2}$ state of erbium. For the core 29 of the fiber 27, the base glass was Schott LG-750 (a potassium-barium-aluminum phosphate glass) doped with a requested 12 percent by weight $Yb^{3+}$ and a range of percents by weight $Er^{3+}$. The glass for the cladding 31 of the fiber was also an LG-750 base glass (undoped with rare-earth ions) and was requested to have an expansion coefficient and glass softening point slightly higher than the doped core glass and a similar glass softening point, while being approximately 0.6% lower in index of refraction. It is desirable for the cladding glass expansion coefficient to be larger than that of the core so that the core is under compression during cooling of the optical fiber. This leads to a low loss interface between the two glasses. The index of refraction of the cladding glass, and therefore the numerical aperture of the fiber, are presently being fine tuned in order to maximize the performance of the fiber by varying the ratios of Ba, K and Na constituent elements in new samples requested from Schott Glass. In order to determine the precise composition of one of the Schott LG-750 glasses, samples of the glass for the core 29 and cladding 31 were prepared for analysis by using a portion of each with a lithium flux. The resulting melt was then dissolved with dilute nitric acid. The solutions were analyzed using conventional emission instrumentation using inductively coupled plasma atomic emission, commonly called ICP. From the spectral line emissions of the samples, the principal, minor and trace constituents of the two glasses were determined. The data resulting from the analysis is set forth below as Table I.

## Table I

### Percentage of Element by Weight

| Sample | P | Ba | Al | K | Na | Ca | Yb | Er |
|---|---|---|---|---|---|---|---|---|
| Cladding | 25.5 | 19.5 | 5.0 | 8.2 | 0.18 | <0.005 | 0.097 | <.001 |
| Core | 23.0 | 11.6 | 3.2 | 8.5 | 0.48 | <0.005 | 10.9 | 0.12 |

The glass analyzed in Table I has not provided the best performance characteristics relative to other samples with different percentage doping of $Er^{3+}$. Specifically, the best performance thus far has been for core glass whose percentage doping of $Er^{3+}$ is approximately 0.5 percent and 12 percent by weight $Yb^{3+}$.

In order to fabricate a fiber according to the invention, we requested that the Optical Fibre Group at the University of Southampton, England, fabricate a single-mode optical fiber comprising the best performing glasses, using the rod-in-tube method. Rods of the two glasses for the core cladding were drilled out with an ultrasonic drill. The rods were then fire polished in order to provide smooth surfaces and, therefore, lower losses at the interface. The rods were kept in a furnace at 400°C for two hours in an attempt to drive off excess water. In this regard, particular attention was directed to fabricating the fiber 27 in a dry atmosphere since it was determined that trace amounts of $H_2O$ leads to excess loss in the 1.5 μm region as well as quenching of the $^4I_{13/2}$ metastable lifetime in $Er^{3+}$. The fabricated fiber 27 had a numerical aperture of 0.14 and a core diameter of 4.9 microns. A relatively large core diameter is desirable since we have noticed a strong quenching effect on the metastable lifetime of the $^4I_{13/2}$ state in $Er^{3+}$ as the core diameter decreases below approximately 5 microns. This effect is possibly due to diffusion of impurities at the interface between the core and cladding.

Although applicants presently prefer the Schott phosphate glass as a host glasses of different constituents may prove to acceptable alternatives or perhaps even better other host glasses are preferred, either because of improved optical properties or advantageous fabrication features (e.g., vapor deposition instead of the rod-in-tube method). The important criteria for selecting a host glass is the maintaining of an efficient transfer of energy from the $Yb^{3+}$ to the $Er^{3+}$.

For example, the Er/Yb energy transfer system may also be efficient in a phosphate-doped fused silica fiber. We find that erbium in a silica host that is doped with a small amount of phosphate relative to the aforementioned phosphate glass is spectroscopically similar to the phosphate fluorescence spectrum. Specifically, we note a factor of two narrowing in the fluorescence of the $^4I_{13/2}$ to $^4I_{15/2}$ emission and an order of magnitude shortening of the $^4I_{11/2}$ lifetime relative to erbium in a germanosilicate fiber. Furthermore, we find that the addition of a significant amounts of $Al_2O_3$, commonly used to prevent clustering of the rare-earth dopants, leads to a decrease in the energy transfer efficiency of the co-doped Er/Yb system. The phosphate glass from Schott contained an amount of $Al_2O_3$ that most likely did not allow us to fully optimize the energy transfer efficiency. The phosphorus-doped fused silica based glass fiber is easier to fusion splice into a glass fiber system than a phosphatic glass fiber. In addition, a silica fiber fabricated by the modified chemical vapor deposition process is likely to have lower loss characteristics than the phosphate fibers fabricated by the rod-in-tube method. Fiber parameters such as numerical aperture would also easier to control. Other host glasses such as borates and phosphoborates may also be suitable for efficient operation of an Er/Yb co-doped fiber.

A screening mechanism for identifying host glasses would be to measure the lifetime of the $^4I_{11/2}$ state of $Er^{3+}$ in different host materials. Short lifetimes would lower the probability of back transfer to the $^2I_{5/2}$ state of $Yb^{3+}$. Selective quenchers such as $D_2O$ when added in small amounts to the core glass may effectively quench the $^4I_{11/2}$ state of Er3+ while leaving the $^4I_{13/2}$ metastable state relatively unaffected. In this regard, silica glass could be doped with $D_2O$ in order to enhance the non-radiative decay from the $^4I_{11/2}$ state of $Er^{3+}$, thereby reducing the back transfer of energy to $Yb^{3+}$.

In addition to the foregoing, Er/Yb co-doped borosilicates may also have sufficient Er/Yb energy transfer process efficiency to make them suitable host materials. Borates have higher multi-phonon decay rates than phosphates and should, therefore, lead to a short $^4I_{11/2}$ lifetime in $Er^{3+}$. However, the addition of the borate $B_2O_3$ to silica lowers the index of refraction so the cladding glass would have to be highly doped with $B_2O_3$ or fluorine in order to lower the index of refraction sufficiently. It was noted in E.R. Taylor et al., Mat. Res. Soc. Symp., Vol. 172 P.321, 1990, that an 80% mole percent borate glass quenches the lifetime of the erbium $^4I_{13/2}$ metastable state to 280 microseconds. For amplifier applications, the lifetime of the $^4I_{13/2}$ state must be much longer in order to achieve significant gain. Use of a lower amount of $B_2O_3$ in the glass may be useful, however. Recently, spectroscopic results were reported on a neodymium-doped borophosphate laser glass (S. Jiang et al., CLEO 1990 Proceedings, Anaheim, CA). This glass showed improved properties over both pure phosphate and borate glasses. Perhaps a silica glass doped with both $P_2O_5$ and $B_2O_3$ would be optimum for the Yb-to-Er energy transfer system. The addition of $P_2O_5$ to silica raises the index of refraction while $B_2O_3$ lowers it, thereby giving good control over the index of the core material.

As an alternative to sensitizing an $Er^{3+}$-doped fiber with $Yb^{3+}$, iron ($Fe^{2+}$ or $Fe^{3+}$) may also lead to an efficient transfer of energy to $Er^{3+}$. $Fe^{2+}$ and $Fe^{3+}$ have broad absorption bands in the near infrared that can be pumped with the output of diode-pumped Nd lasers in accordance with the invention. The oxidation state of Fe is not easily controlled during optical fiber fabrication, but either one of the oxidation states $Fe^{2+}$ or $Fe^{3+}$ should work. The Fe sensitized erbium fiber could be fabricated in a silica glass fiber. rather than in a phosphate, which should make fusion splicing into an existing silica glass optical fiber system straightforward. We have observed erbium fluorescence when pumping an Fe/Er co-doped fiber at 1.064 microns, a wavelength where only the sensitizer Fe has a finite absorption. The fluorescence indicates energy transfer is occurring from $Fe^{2+}$ or $Fe^{3+}$ to $Er^{3+}$. Sensitization by other transition metals, such as $Cr^{4+}$, is also a possibility.

An even broader range of sensitizers are available if ions that sensitize $Yb^{3+}$, such as $Nd^{3+}$ or $Cr^{3+}$, are considered. It has been shown, (for example, by J.G. Edwards and J.N. Sandoe J. Phys. D: Appl. Phys, 7 1078-1095, 1974) that transfer from $Nd^{3+}$ to $Yb^{3+}$ is very efficient even with relatively small $Nd^{3+}$ concentrations ($\sim 10^{19}$ $cm^{-3}$) if large Yb3+ concentrations ($\sim 10^{21}$ $cm^{-3}$) are used. Furthermore, undesirable interactions between $Nd^{3+}$ and $Er^{3+}$ can be minimized if the $Nd^{3+}$ and $Er^{3+}$ concentrations are both small ($\sim 10^{19}$ $cm^{-3}$). A three-ion sensitization process ($Nd^{3+}$'$Yb^{3+}$'$Er^{3+}$) can be used in glasses where the $Yb^{3+}$'$Er^{3+}$ transfer is efficient (e.g., phosphate). This is potentially important because it may allow efficient pumping of fiber amplifiers with readily-available 800 nm laser diodes. With equal concentrations of $Nd^{3+}$ and $Er^{3+}$, the $Nd^{3+}$ ground-state absorption is much larger than either the ground or excited state $Er^{3+}$ absorption. Moreover, $Er^{3+}$ ESA should not limit the pump efficiency as it does with direct pumping of $Er^{3+}$. This approach would not be feasible in conventional silicic glass fiber because of the inefficient $Yb^{3+}/Er^{3+}$ transfer.

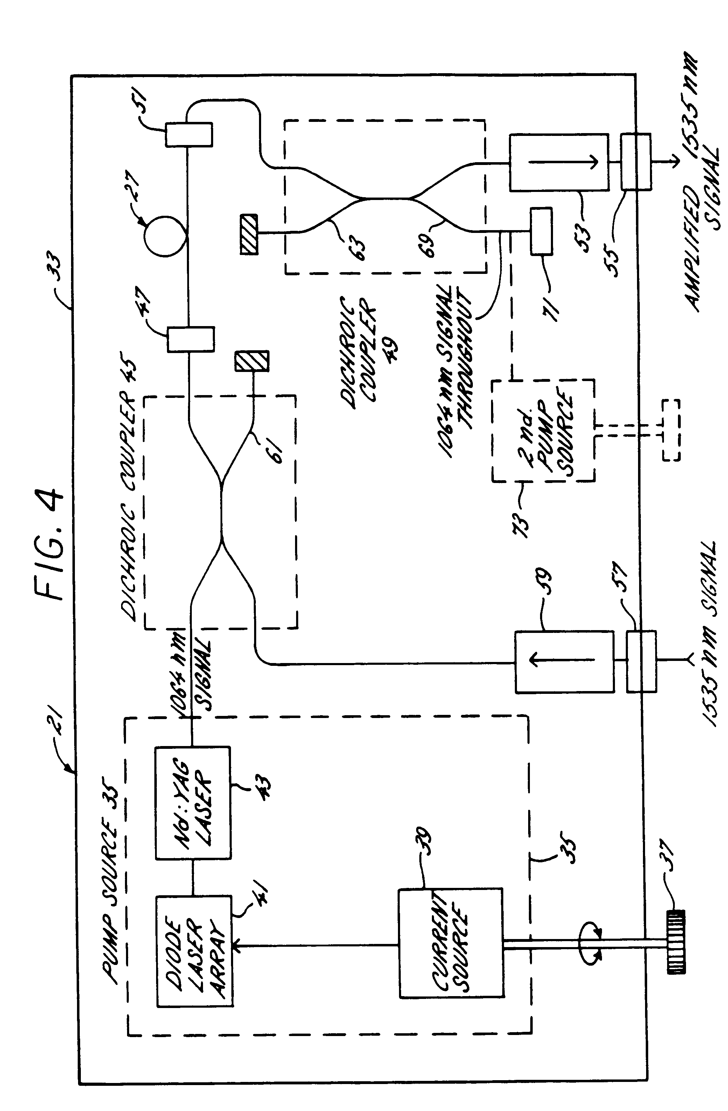

In an optical amplifier 21 according to the invention illustrated in Figure 4, the $Er^{3+}/Yb^{3+}$ phosphate fiber 27 of Figure 3 is approximately 80-130 centimeters long at a concentration of $Er^{3+}$ of 0.5 percent by weight. The fiber 27 is wrapped loosely in a coiled configuration so that it more easily fits into a housing 33 shown as a solid line about the perimeter of the amplifier 25. For a pump source, a model 1064-350P diode-pumped Nd:YAG laser 35 manufactured by Amoco Laser Company of Naperville, Illinois, was modified to include a control knob 37 accessible from the outside of the housing 33. The knob 37 provides an external control of the source 39 of drive current for a laser diode array 41 of the pump source 35.

In keeping with the invention, the laser diode array 41 is efficiently coupled to a Nd:YAG laser 43 so that a relatively high percentage of the energy contained in the incoherent multimode light from the array is converted to coherent single mode light emanating from the Nd:YAG laser 43. The laser diode array 41 pumps the Nd:YAG laser 43 in the manner set forth in U.S. Patent NO. 4,710,940, -which is herein incorporated by reference. The Nd:YAG laser 43 outputs a single-mode light signal at a characteristic frequency of 1064 nm. Other diode-pumped $Nd^{3+}$ doped crystal or glass lasers may also be utilized as pump sources.

The higher pump intensities in the co-doped fiber relative to direct diode-pumped erbium fibers ensure a high degree of inversion of the erbium and hence a low noise figure. This intense pumping may be especially important at high input signal powers (i.e., power amplifier performance), which is the preferred mode of this invention. Specifically, these higher levels of pump power, compared to direct diode-pumped amplifiers, present at the signal entry end of the amplifier ensure a high-level of saturation in the erbium thereby exhibiting a nearly quantum-limited noise figure. Intense pumping of a sensitizer, which is typically present in the ratio of 10 to 80:1 referenced to erbium, also ensures a high degree of saturation under all operating conditions (i.e., signal input powers). Pumping through a sensitizer network can also have advantages with regards to damping of pump-power fluctuations and reducing transient gain saturation and crosstalk effects.

The Nd:YAG laser 43 of the pump source 35 is directly fiber coupled or "pigtailed" to a wavelength division multiplexing (WDM) or dichroic fiber optic coupler 45, such as a model (980/1550-COX-MX-O1X02-01 ), manufactured by Gould Inc. of Glen Burnie, Maryland. The output of the coupler 45 and the input to the fiber are terminated by a conventional means for coupling fibers. The means 47 comprises standard ST-PC ceramic ferrules aligned in a pair of low expansion metal disks fabricated from a material such as Invar and made at Amoco Laser Co. Also, an ultraviolet curing epoxy of intermediate index of refraction is placed between the dissimilar phosphate and silica fibers to enhance coupling and suppress backreflections lending to noise and/or lasing of the erbium-doped fiber. To achieve correct alignment, power throughput the fiber 27 is monitored while the alignment is made. The two disks are soldered to each other to maintain alignment between the amplifying fiber 27 and the coupler 45.

An alternative method of coupling the fibers is to enclose both of them in ceramic ferrules that are polished at an angle q sufficiently large to suppress back reflections. The angle q would be given by

$$q > \sin^{-1} (N.A.)$$

where N.A. is the larger of the two numerical apertures of the two dissimilar fibers. The angled ferrules would also be contained in Invar disks and actively aligned. For either alignment method, the coupling process can be substantially simplified if the amplifying fiber is manufactured to the same concentricity and diameter tolerances as the [silica] coupler fiber.

At the output of the fiber 27, the fiber terminates into a Gould coupler 49 of the same type aligned with the input to the fiber. Alignment between the output of the fiber 27 and the coupler 49 is achieved in the same manner as with the input. Specifically, the input of the coupler 49 and the output of the fiber 27 are terminated by a conventional means 51 for coupling fiber comprising ST ceramic ferrules actively aligned in two Invar disks. The two Invar disks are soldered to maintain alignment between the fiber 27 and the coupler 49. As with the coupling 47, the coupling 51 includes an ultraviolet curing epoxy of intermediate index of refraction for suppressing back reflections.

A polarization insensitive optical isolator 53 such as model number OTPISO15, manufactured by Gould Inc., Glen Burnie, Maryland, is fusion spliced to the 1535 nm output leg of the coupler 49. The output of the isolator 53 terminates into a conventional ST-PC single-mode connector 55 (0.15 dB loss and - 45 dB back reflection). The fiber cable 21 or 23 in Figure 1 carrying the 1535 signal to either of the amplifiers 25 is terminated at a conventional ST-PC connector 57, which in turn is connected to a isolator 59 of the same type as the isolator 53 at the output of the amplifier. In the couplers 45 and 49, the ends of the unused fiber legs 61 and 63 were melted in a fusion splicer to fabricate ball lenses 65 and 67 to prevent back reflections. The other leg 69 of the coupler 49 selectively throughputs the 1064 nm light from the fiber 27 so that it terminates into a non-reflecting metal block 71 of conventional construction.

Regarding the efficiency, output power and noise characteristics of the amplifier 25, there is an enhancement to the arrangement of the amplifier in Figure 4 that may improve its performance. Since the $Er^{3+}/Yb^{3+}$ gain medium must be saturated in its three-quantum level amplifying system along the entire length of the fiber for the fiber to fully amplify the 1535 nm signal, significant power levels of the pump light at 1064 nm will exist at the output of the fiber. However, the amount of excess pump light needed at the exiting end of the amplifier fiber 27 to ensure Er saturation is less than that needed for direct pumping of Er. If significant levels of the pump power exit at the output of the fiber 27, it may be desirable to place at the end of the leg 69 in the coupler 49 a mirror (not shown) that is highly reflective at the pump wavelengths of approximately 1064 nm. In this fashion, the excess 1064 nm pump light is afforded a second pass through the fiber 27, thereby improving system gain, output power and medium inversion, all of which improve noise performance.

As an alternative to the addition of a mirror at the end of the leg 69 of the coupler 49, a second pump source 73 shown in dashed lines in Figure 4 may be added to the amplifier at the end of the leg 69. In this manner, the fiber 27 is bi-directionally pumped by the pump source 35 and the second pump source 73. The second pump source 73 is preferably of the same type as the pump source 35. In this alternative configuration of the amplifier 27, the pump sources 35 and 73 may require isolators at their outputs such as the isolators 53 and 59. The isolators will prevent feedback effects from developing in the pump sources as a result of the bidirectional pumping. The higher pump energy in this configuration will lead to a longer optimum value for the length of the fiber 27. This will in turn lead to increased pump absorption and possibly minimize feedback effects.

Alternatively, the second pump source could be another $Nd^{3+}$ doped crystal such as YLF with a characteristic emission at either 1047 or 1053 nm. In this fashion, the two pump wavelengths will not overlap in frequency and therefore will not cause feedback induced instabilities in the laser pump sources.

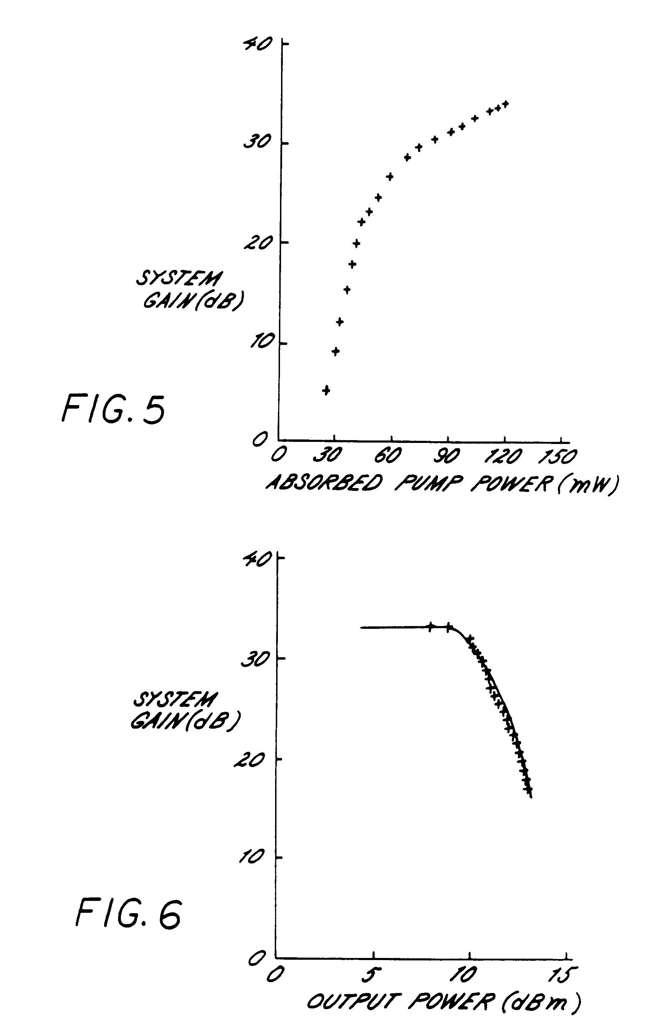

Turning to the graphs and Figures 5 and 6, we have built and tested a prototype amplifier as described in connection with Figures 3 and 4. Various different fabrications of the erbium fiber 27 have been substituted into the amplifier in order to achieve the best performance characteristics. The data in Figures 5 and 6 reflect the latest and best system results achieved. The fiber providing the best performance had a numerical aperture of 0.14 microns and a core diameter of 4.9 microns. It was fabricated as described in connection with Figure 3 and its constituents were approximately 0.5 percent $Er^{3+}$ by weight and 12 percent $Yb^{3+}$ by weight.

For an input signal having a power of approximately 1.5 microwatts (-28 dBm), we observed a signal gain of 34.5 dB (i.e., an amplification of approximately 2,800) at an absorbed pump power of 120 milliwatts. To collect the data points for the graph of Figure 5, the input signal was held at 1.5 microwatts and the pump power was varied from about 40 milliwatts to 210 milliwatts. As can be seen from the data in Figure 5, the absorbed pump power varied from about 25 milliwatts to 120 milliwatts. From the device in Figure 4, the absorbed pump power was determined by measurement of the pump power at the pump output coupler port 71, measurement of the coupling loss at points 47 and 51, and a knowledge of attenuation loss at the pump wavelength of the fiber 27.

To the best of our knowledge, the small signal gains plotted in the graph of Figure 5 are as good as or better than those presently achieved from any erbium-doped fiber amplifier system utilizing a diode laser as an ultimate pump source. Moreover, these gains are realized at high levels of output power as evidenced by the data in Figure 6.

In this regard, the data of Figure 6 were collected by maintaining the level of absorbed pump power at 140 milliwatts while varying the power of the input signal. Power saturation (i.e., decrease in gain of three dB) occurs at approximately an output power of nine (9) dBm. To the best of our knowledge, the high power and high gain performance evidenced by the data of Figures 5 and 6 cannot be equalled by known erbium fiber amplifiers utilizing single diode lasers as direct pump sources.

Both the small signal gain and power results of Figure 6 are system results, meaning they are measured from the input signal at input connector 57 to the output signal at output connector 55. As the amplifying fiber 27 is not yet fully optimized with regards to core size, numerical aperture, and coupling method, there are large system coupling losses. For example, there is approximately a 4 dB loss in the input signal from the input connector 57 to the input end of the amplifying fiber at point 47. The loss is even slightly larger in going from the output end of the amplifier fiber at point 51 to the output connector 55. With improved fiber, coupling methods and 1064/1535 specific WDM couplers, we expect very large improvements in system performance.

In view of the foregoing, it can be seen that an erbium glass doped with a sensitizer and pumped by a neodymium laser rod that is in turn pumped by a laser diode array provides a high power and high gain optical amplifier for light in the 1.535 micron region. The amplifier maintains small signal gains comparable to the best of previous erbium fiber amplifier systems utilizing diode pump sources for achieving high output power levels. In this connection, the amplifier is ideal for high power applications such as illustrated herein. Examples of possible other applications are soliton pulse amplification and amplification of short pulse diodes for Optical Time Domain Reflectometry (OTDR) or rangefinding measurements.

## Claims

1. An apparatus for amplifying an optical signal whose characteristic wavelength is approximately 1.535 microns, the apparatus comprising in combination:

   a glass fiber having a core and cladding defining a single mode waveguide for the optical signal;

   means for coupling the optical signal into the fiber;

   means for suppressing reflection of the optical signal within the glass fiber;

   a laser source for end pumping the glass fiber such that the optical signal is amplified to have a power saturation output greater than zero dBm;

   erbium doped into the core of the glass fiber at a percentage by weight that is selected to optimize the transfer of energy from the laser source to the optical signal;

   a sensitizer doped into the core of the glass fiber for populating the erbium metastable $^4I_{13/2}$ state in response to the laser source in order to amplify the optical signal; and

   a host material of the glass fiber selected to reduce the back transfer of energy from the erbium to the sensitizer by providing a shorter lifetime for the $^4I_{11/2}$ state in erbium than then the lifetime of the $^4I_{11/2}$ state for erbium doped in a conventional silica-based glass fiber.

2. An apparatus as set forth in claim 1 wherein the selected percentage weight of erbium is approximately 0.5.

3. An apparatus as set forth in claim 1 wherein the laser source provides light of a characteristic wavelength of approximately 1.064 microns.

4. An apparatus as set forth in claim 3 wherein the sensitizer is selected from the transition elements.

5. An apparatus as set forth in claim 4 wherein the sensitizer is the element ytterbium (Yb).

6. An apparatus as set forth in claim 1 wherein the host material of the glass fiber is selected from the group phosphorus (P), silicon (Si), boron (B) and combinations thereof.

7. An apparatus as set forth in claim 6 wherein the host material of the glass fiber is phosphorus.

8. An apparatus as set forth in claim 1 wherein the laser source comprises:

   at least one laser diode; and

   a neodymium (Nd) laser rod pumped by at least one laser diode for providing an output of light at a characteristic wavelength of 1.064 microns that is coherent and of a single mode.

9. An apparatus as set forth in claim 1 wherein the laser source includes a 808 nm laser diode.

10. An optical amplifier for amplifying a light signal having a characteristic wavelength of approximately 1535 nm, the amplifier comprising in combination:

at least one laser diode radiating energy at approximately 800 nm;

a fiber including at least a concentration of sensitizer ions and erbium ions ($Er^{3+}$) for receiving and amplifying the light signal in a single mode, wherein the fiber is end-pumped by the energy originating from the laser diode; and

a source of neodymium (Nd) for absorbing the energy radiating from the at least one laser diode and transferring the energy to the concentration of sensitizer ions, which in turn transfers the energy to the concentration of $Er^{3+}$, causing the energy radiate as light at approximately 1535 nm.

11. An optical amplifier as set forth in claim 10 wherein the source of neodymium is a neodymium laser rod pumped by the at least one laser diode.

12. An optical amplifier as set forth in claim 10 wherein the source of neodymium is a concentration of neodymium ions ($Nd^{3+}$) in the fiber.

FIG. 1

FIG. 2

FIG. 3

FIG. 4

PUMP SOURCE 35

DIODE LASER ARRAY 41

Nd³⁺:YAG LASER 43

CURRENT SOURCE 39

DICHROIC COUPLER 45

1064 nm SIGNAL

61

47

51

27

33

21

DICHROIC COUPLER 49

1064 nm SIGNAL THROUGHOUT

63

69

71

53

55

2 nd. PUMP SOURCE 73

59

57

1535 nm SIGNAL

AMPLIFIED 1535 nm SIGNAL

37

FIG. 5

SYSTEM
GAIN(dB)

ABSORBED PUMP POWER (mW)

FIG. 6

SYSTEM
GAIN(dB)

OUTPUT POWER (dBm)

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | OPTICAL FIBER COMMUNICATION CONFERENCE, (TECHNICAL DIGEST SERIES OF THE OPTICAL SOCIETY OF AMERICA) vol. 1, January 1988, WASHINGTON, US pages 218 - 221; SNITZER ET AL.: 'Erbium fiber laser amplifier at 1.55 um with pump at 1.49 um and Yb sensitized Er oscillator' * the whole document * | 1, 10 | H01S3/17 H01S3/06 H04B10/16 |
| A | DE-B-1 789 198 (AMERICAN OPTICAL CORP.) * column 4, line 26 - line 57; claims; figure 3 * | 1, 10 | |
| A | JOURNAL OF LIGHTWAVE TECHNOLOGY. vol. 7, no. 10, October 1989, NEW YORK US pages 1473 - 1477; FARRIES ET AL.: 'Operation of Erbium-doped fiber Amplifiers and lasers pumped with frequency-doubled Nd:YAG lasers' * abstract; figures 1,2 * *sections: Introduction, Amplifier Results, Conclusions* | 1, 10 | |
| A,D | OPTICS COMMUNICATIONS. vol. 63, no. 6, 15 September 1987, AMSTERDAM NL pages 417 - 420; HANNA ET AL.: 'A 1.54 um Er glass laser pumped by a 1.064 um Nd:YAG laser' *Introduction, fig.1* | 1, 10 | TECHNICAL FIELDS SEARCHED (Int. Cl.5 )  H04B H01S |

-/--

The present search report has been drawn up for all claims

| Place of search | Date of completion of the search | Examiner |
|---|---|---|
| BERLIN | 18 MARCH 1992 | HYLLA W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | SOVIET JOURNAL OF QUANTUM ELECTRONICS. vol. 11, no. 9, September 1981, NEW YORK US pages 1266 - 1268; ARTEM'EV ET AL.: 'Some characteristics of population inversion of the 4-I-13/2 level of erbium ions in ytterbium-erbium glasses' * abstract; figure 1 * * page 1266, right column, paragraph 1 - page 1267, left column, paragraph 1 * * page 1268, right column, paragraph 2 -paragraph 3 * | 1,10 | |

-----

|  | TECHNICAL FIELDS SEARCHED (Int. Cl.5 ) |

The present search report has been drawn up for all claims

| Place of search | Date of completion of the search | Examiner |
|---|---|---|
| BERLIN | 18 MARCH 1992 | HYLLA W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)